(19) Europäisches Patentamt / European Patent Office / Office européen des brevets

(11) **EP 4 116 462 A2**

(12) **EUROPEAN PATENT APPLICATION**

(43) Date of publication:
**11.01.2023 Bulletin 2023/02**

(21) Application number: **22204122.0**

(22) Date of filing: **27.10.2022**

(51) International Patent Classification (IPC):
**C25B 9/00** (2021.01)     **G06T 7/73** (2017.01)
**G06T 7/246** (2017.01)

(52) Cooperative Patent Classification (CPC):
**G06T 7/73; G06T 7/246;** G06T 2207/10016;
G06T 2207/30244; G06T 2207/30256

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.10.2021 CN 202111260082**

(71) Applicant: **BEIJING BAIDU NETCOM SCIENCE
AND
TECHNOLOGY CO. LTD.
100085 Beijing (CN)**

(72) Inventors:
• **TIAN, Feng**
  **Beijing, 100085 (CN)**
• **CHONG, Daochen**
  **Beijing, 100085 (CN)**
• **LIU, Yuting**
  **Beijing, 10085 (CN)**

(74) Representative: **Stöckeler, Ferdinand et al
Schoppe, Zimmermann, Stöckeler
Zinkler, Schenk & Partner mbB
Patentanwälte
Radlkoferstrasse 2
81373 München (DE)**

(54) **METHOD AND APPARATUS OF PROCESSING IMAGE, ELECTRONIC DEVICE, STORAGE MEDIUM AND PROGRAM PRODUCT**

(57)     A method and an apparatus of processing an image, an electronic device, a storage medium and a program product are provided, which relate to the artificial intelligence field, in particular to fields of computer vision and intelligent transportation technologies. The method includes: determining at least one key frame image in a scene image sequence captured by a target camera; determining a camera pose parameter associated with each key frame image in the at least one key frame image, according to a geographic feature associated with the key frame image; and projecting each scene image in the scene image sequence to obtain a target projection image according to the camera pose parameter associated with the key frame image, so as to generate a scene map based on the target projection image. The geographic feature associated with any key frame image indicates localization information of the target camera at a time instant of capturing the corresponding key frame image.

FIG. 2

EP 4 116 462 A2

**Description**

TECHNICAL FIELD

The present disclosure relates to a field of artificial intelligence technology, in particular to fields of computer vision and intelligent transportation technologies, and may be applied in a map generation scenario.

BACKGROUND

Maps are widely used in daily life and technology research and development. For example, in intelligent transportation and driving assistance technologies, a high-precision map may provide a data support for a vehicle intelligent control. However, in some scenarios, a high generation cost, a low generation efficiency, a poor map accuracy and other phenomena may exist in a map generation process.

SUMMARY

The present disclosure provides a method and an apparatus of processing an image, an electronic device, a storage medium, and a program product.

According to an aspect of the present disclosure, a method of processing an image is provided, including: determining at least one key frame image in a scene image sequence captured by a target camera; determining a camera pose parameter associated with each key frame image in the at least one key frame image, according to a geographic feature associated with the key frame image; and projecting each scene image in the scene image sequence to obtain a target projection image according to the camera pose parameter associated with each key frame image, so as to generate a scene map based on the target projection image, wherein the geographic feature associated with any key frame image indicates a localization information of the target camera at a time instant of capturing the corresponding key frame image.

According to another aspect of the present disclosure, an apparatus of processing an image is provided, including: a first processing module configured to determine at least one key frame image in a scene image sequence captured by a target camera; a second processing module configured to determine a camera pose parameter associated with each key frame image in the at least one key frame image, according to a geographic feature associated with the key frame image; and a third processing module configured to project each scene image in the scene image sequence to obtain a target projection image according to the camera pose parameter associated with each key frame image, so as to generate a scene map based on the target projection image, wherein the geographic feature associated with any key frame image indicates a localization information of the target camera at a time instant of capturing the corresponding key frame image.

According to another aspect of the present disclosure, an electronic device is provided, including: at least one processor; and a memory communicatively connected to the at least one processor, wherein the memory stores instructions executable by the at least one processor, and the instructions, when executed by the at least one processor, cause the at least one processor to implement the method of processing the image as described above.

According to another aspect of the present disclosure, a non-transitory computer-readable storage medium having computer instructions therein is provided, and the computer instructions are configured to cause a computer system to implement the method of processing the image as described above.

According to another aspect of the present disclosure, a computer program product containing a computer program is provided, and the computer program, when executed by a processor, causes the processor to implement the method of processing the image as described above.

It should be understood that content described in this section is not intended to identify key or important feature in embodiments of the present disclosure, nor is it intended to limit the scope of the present disclosure. Other feature of the present disclosure will be easily understood through the following description.

BRIEF DESCRIPTION OF THE DRAWINGS

The accompanying drawings are used for better understanding of the solution and do not constitute a limitation to the present disclosure, wherein:

FIG. 1 schematically shows a system architecture of a method and an apparatus of processing an image according to embodiments of the present disclosure;

FIG. 2 schematically shows a flowchart of a method of processing an image according to embodiments of the present disclosure;

FIG. 3 schematically shows a flowchart of a method of processing an image according to other embodiments of the present disclosure;

FIG. 4 schematically shows a schematic diagram of a key frame image according to embodiments of the present disclosure;

FIG. 5 schematically shows an image processing process according to embodiments of the present disclosure;

FIG. 6 schematically shows a block diagram of an apparatus of processing an image according to embodiments of the present disclosure; and

FIG. 7 schematically shows a block diagram of an electronic device for implementing a method of processing an image according to embodiments of the present disclosure.

DETAILED DESCRIPTION OF EMBODIMENTS

Exemplary embodiments of the present disclosure will be described below with reference to the accompanying drawings, which include various details of embodiments of the present disclosure to facilitate understanding and should be considered as merely exemplary. Therefore, those of ordinary skilled in the art should realize that various changes and modifications may be made to embodiments described herein without departing from the scope and spirit of the present disclosure. Likewise, for clarity and conciseness, descriptions of well-known functions and structures are omitted in the following description.

The terms used herein are for the purpose of describing specific embodiments only and are not intended to limit the present disclosure. The terms "comprising", "including", "containing", etc. used herein indicate the presence of the feature, step, operation and/or part, but do not exclude the presence or addition of one or more other features, steps, operations or parts.

All terms used herein (including technical and scientific terms) have the meanings generally understood by those skilled in the art, unless otherwise defined. It should be noted that the terms used herein shall be interpreted to have meanings consistent with the context of this specification, and shall not be interpreted in an idealized or too rigid way.

In a case of using an expression similar to "at least one selected from A, B or C", it should be explained according to the meaning of the expression generally understood by those skilled in the art (for example, "a system including at least one selected from A, B or C" should include but not be limited to a system including only A, a system including only B, a system including only C, a system including A and B, a system including A and C, a system including B and C, and/or a system including A, B and C).

Embodiments of the present disclosure provide a method of processing an image. For example, at least one key frame image is determined in a scene image sequence captured by a target camera, and a camera pose parameter associated with each key frame image in the at least one key frame image is determined according to a geographic feature associated with the key frame image. A camera pose parameter associated with a non-key frame image in the scene image sequence may be determined according to the camera pose parameter associated with each key frame image, so as to obtain the camera pose parameter associated with each scene image in the scene image sequence. Each scene image in the scene image sequence may be projected to obtain a target projection image according to the camera pose parameter associated with the scene image, so as to generate a scene map based on the target projection image. The geographic feature associated with any key frame image indicates a localization information of the target camera at a time instant of capturing the corresponding key frame image.

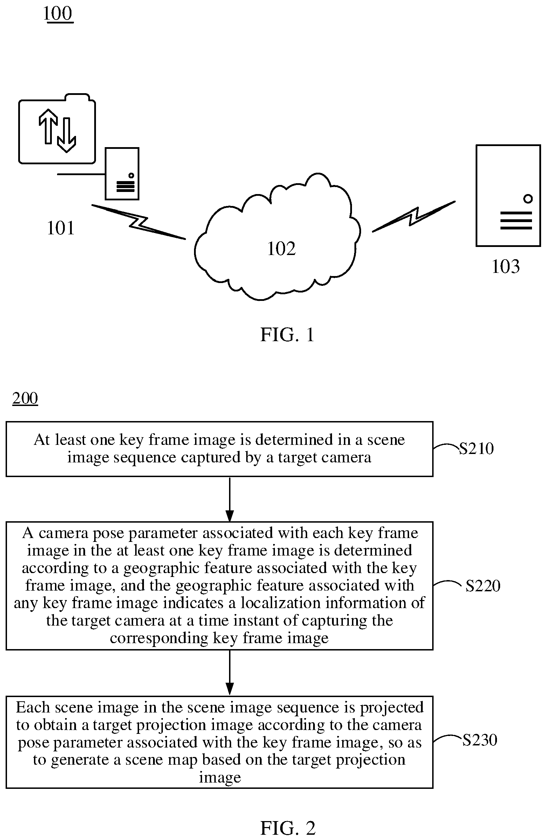

FIG. 1 schematically shows a system architecture of a method and an apparatus of processing an image according to embodiments of the present disclosure. It should be noted that FIG. 1 is only an example of a system architecture to which embodiments of the present disclosure may be applied to help those skilled in the art understand the technical content of the present disclosure, but it does not mean that embodiments of the present disclosure may not be applied to other devices, systems, environments or scenarios.

A system architecture 100 according to such embodiments may include a data terminal 101, a network 102, and a server 103. The network 102 is a medium for providing a communication link between the data terminal 101 and the server 103. The network 102 may include various connection types, such as wired, wireless communication links, optical fiber cables, and the like. The server 103 may be an independent physical server, or a server cluster or distributed system including a plurality of physical servers, or a cloud server that provides cloud service, cloud computing, network service, middleware service and other basic cloud computing services.

The data terminal 101 is used to store the scene image sequence captured by the target camera. The data terminal 101 may include a local database and/or a cloud database, and may further include a scene image acquisition terminal provided with the target camera. The acquisition terminal may transmit the scene image sequence captured by the target camera to the server 103 for image processing.

The server 103 may be used to determine at least one key frame image in the scene image sequence captured by the target camera, determine a camera pose parameter associated with each key frame image in the at least one key frame image according to a geographic feature associated with the key frame image, and project each scene image in the scene image sequence according to the camera pose parameter associated with each key frame image, so as to obtain a target projection image. The geographic feature associated with any key frame image indicates a localization information of the target camera at a time instant of capturing the corresponding key frame image.

It should be noted that the method of processing the image provided by embodiments of the present disclosure may be performed by the server 103. Accordingly, the apparatus of processing the image provided by embodiments of the present disclosure may be provided in the server 103. The method of processing the image provided by embodiments of the present disclosure may also be performed by a server or server cluster different from the server 103 and capable of communicating with the data terminal 101 and/or the server 103. Accordingly, the apparatus of processing the image provided by embodiments of the present disclosure may also be provided in a server or server cluster different from the server 103 and capable of communicating with the data terminal 101 and/or the server 103.

It should be understood that the number of data terminal, network and server shown in FIG. 1 is only schematic. According to implementation needs, any number of data terminals, networks and servers may be provided.

Embodiments of the present disclosure provide a method of processing an image. The method of processing the image according to exemplary embodiments of the present disclosure will be described in detail below with reference to FIG. 2 to FIG. 5 in combination with the system architecture of FIG. 1. The method of processing the image of embodiments of the present disclosure may be performed by, for example, the server 103 shown in FIG. 1.

FIG. 2 schematically shows a flowchart of a method of processing an image according to embodiments of the present disclosure.

As shown in FIG. 2, a method 200 of processing an image of embodiments of the present disclosure may include, for example, operation S210 to operation S230.

In operation S210, at least one key frame image is determined in a scene image sequence captured by a target camera.

In operation S220, a camera pose parameter associated with each key frame image in the at least one key frame image is determined according to a geographic feature associated with the key frame image. The geographic feature associated with any key frame image indicates a localization information of the target camera at a time instant of capturing the corresponding key frame image.

In operation S230, each scene image in the scene image sequence is projected to obtain a target projection image according to the camera pose parameter associated with each key frame image, so as to generate a scene map based on the target projection image.

An example flow of each operation in the method of processing the image of such embodiments will be described in detail below.

For example, at least one key frame image may be determined in the scene image sequence captured by the target camera. The target camera may include, for example, a monocular camera. The monocular camera may capture a scene image of a surrounding environment at a preset frequency. By projecting the scene image on a camera imaging plane, a three-dimensional scene may be reflected by means of a two-dimensional image. A de-distortion may be performed on the scene image in the scene image sequence before a determination of the at least one key frame image.

When determining the at least one key frame image, according to an example method, it is possible to perform a feature extraction on each scene image in the scene image sequence to obtain an image feature associated with the scene image. For each scene image in the scene image sequence, the at least one key frame image may be determined according to a similarity between an image feature associated with the corresponding scene image and an image feature associated with a previous key frame image. For example, a predetermined initial mark image in the scene image sequence may be determined as a first key frame image. The initial mark image may be a first scene image in the scene image sequence, or a manually selected reference scene image, which is not limited in embodiments of the present disclosure.

The image feature associated with any scene image may include a feature point and/or a feature line in the corresponding scene image. The feature point may include a pixel whose gray-scale gradient in the two-dimensional direction is greater than a predetermined threshold, and the feature point may be used for image matching and target tracking. The feature line may include a line structure having a gray-scale gradient greater than a predetermined threshold, and the feature line may include, for example, a bright line in a dark background, a dark line in a bright background, a linear narrow region, or other recognizable linear structures. For example, the feature line in the scene image may be extracted by using an LSD (Line Segment Detector) algorithm. The feature line in the scene image may include, for example, a roadway centerline, a lane boundary line, a stop line, a slow-down and yield line, a crosswalk line, a guiding line, and other traffic markings.

According to a feature similarity between each scene image and the previous key frame image, it may be determined whether the corresponding scene image is a key frame image or not. It may be determined whether the corresponding scene image is a key frame image or not according to a descriptor distance between a feature point in the scene image and a feature point in the previous key frame image, and/or according to a line structure similarity between a feature line in the scene image and a feature line in the previous key frame image.

For example, for each scene image in the scene image sequence, a feature point tracking may be performed based on the corresponding scene image and the previous key frame image. When the descriptor distance between a feature point of the scene image and a feature point of the previous key frame image is less than a predetermined threshold, it may be determined that a corresponding feature point is a matching feature point. When a number of matching feature point between the scene image and the previous key frame image is greater than a predetermined threshold, it may be determined that the corresponding scene image is a key frame image. In addition, a feature line tracking may be performed on the scene image and the previous key frame image. When a number of matching feature line is greater than a predetermined threshold, it may be determined that the corresponding scene image is a key frame image.

In another example method, it is possible to determine a pose variation between each scene image and a previous key frame image, that is, a spatial distance and/or a spatial angle between each scene image and the previous key frame image, according to the geographic feature associated with the scene image. When the spatial distance and/or the spatial angle are/is less than a predetermined threshold, it may be determined that the corresponding scene image is a key frame image.

For example, it is possible to limit a distance between adjacent key frame images, such as limiting that the distance between adjacent key frame images is greater than ten frames, and/or limiting a number of feature point in the key frame image, so as to effectively control a number of key frame image and improve a projection efficiency for the scene image sequence.

The geographic feature associated with any scene image indicates a localization information of the target camera at a time instant of capturing the corresponding scene image. The localization information may be, for example, a GPS information acquired by the target camera or a GPS information acquired by a localization device. The GPS information may include, for example, longitude, latitude, altitude and other information.

After the at least one key frame image is determined, the camera pose parameter associated with each key frame image may be determined according to the geographic feature associated with the key frame image. The camera pose parameter indicates a conversion relationship between a world coordinate system and a camera coordinate system. The world coordinate system is a three-dimensional rectangular coordinate system established with a projection point of the target camera on a ground as an origin. The camera coordinate system is a three-dimensional rectangular coordinate system established with a focus center of the target camera as an origin and an optical axis as a Z-axis.

The camera pose parameter may include a camera rotation parameter and a camera displacement parameter. The camera pose parameter refers to an external parameter of the target camera, which may be represented, for example, by an external parameter matrix $M=[R_r|\ T_r]$, where $R_r$ represents a rotation matrix of the camera coordinate system relative to the world coordinate system, and $T_r$ represents a translation vector of the camera coordinate system relative to the world coordinate system.

When determining the camera pose parameter associated with each key frame image, in an example method, it is possible to determine, for each key frame image in the at least one key frame image, a world coordinate of a calibration feature point in the key frame image in the world coordinate system according to the geographic feature associated with the key frame image. The camera pose parameter associated with the key frame image may be determined according to the world coordinate of the calibration feature point in the key frame image and a pixel coordinate of the calibration feature point in the camera coordinate system.

For example, for each key frame image in the at least one key frame image, the pixel coordinate of the calibration feature point in the camera coordinate system may be measured in the corresponding key frame image. A distance between the calibration feature point and a ground projection point, an azimuth angle from the calibration feature point to the ground projection point, and the altitude information in the GPS information may be determined according to the GPS information acquired by the monocular camera, so as to determine the world coordinate of the calibration feature point in the world coordinate system.

The camera pose parameter associated with the key frame image may be determined according to the world coordinate and the pixel coordinate of the calibration feature point in the key frame image. For example, the camera external parameter matrix (i.e. the camera pose parameter) associated with the key frame image may be calculated by Equation (1):

$$\begin{bmatrix} x \\ y \\ 1 \end{bmatrix} = M_1 M_2 \begin{bmatrix} X_w \\ Y_w \\ Z_w \\ 1 \end{bmatrix} \qquad (1),$$

where x represents a pixel abscissa of the target feature point, y represents a pixel ordinate of the target feature point, $M_1$ represents a camera internal parameter matrix, $M_2$ represents a camera external parameter matrix, $X_w$ represents a world abscissa of the calibration feature point, $Y_w$ represents a world ordinate of the calibration feature point, and $Z_w$ represents a world vertical coordinate of the calibration feature point. The camera internal parameter matrix may include a camera principal point, a camera focal length, and a distortion coefficient.

When determining the camera pose parameter associated with each key frame image, in another example method, it is possible to determine a world coordinate of a calibration feature point in the initial mark image in the world coordinate system according to the geographic feature associated with the predetermined initial mark image. An initial camera pose parameter associated with the initial mark image may be determined according to the world coordinate of the calibration feature point in the initial mark image and a pixel coordinate of the calibration feature point in the camera coordinate system. A calibration feature point tracking may be performed on each key frame image based on the initial mark image, so as to obtain a camera pose variation associated with each key frame image based on the initial camera pose parameter. The camera pose parameter associated with each key frame image may be determined according to the initial camera pose parameter and the camera pose variation associated with each key frame image.

For example, the feature point tracking may be performed for each key frame image based on the calibration feature point in the initial mark image, so as to determine a matching feature point of each key frame image matched with the calibration feature point in the initial mark image. According to the calibration feature point in the initial mark image and the matching feature point in the key frame image, it is possible to determine a homography matrix between the initial mark image and the corresponding key frame image. The camera pose variation of the key frame image relative to the initial mark image may be obtained by decomposing the homography matrix.

According to the initial camera pose parameter and the camera pose variation associated with each key frame image, the camera pose parameter associated with the corresponding key frame image may be determined. For example, the camera external parameter matrix (camera pose parameter) associated with the key frame image may be calculated by Equation (2):

$$\begin{bmatrix} R & T \\ 0 & 1 \end{bmatrix} = \begin{bmatrix} R_{cf} & T_{cf} \\ 0 & 1 \end{bmatrix} * \begin{bmatrix} R_{born} & T_{born} \\ 0 & 1 \end{bmatrix} \qquad \text{Equation (2),}$$

where R represents a rotation matrix in the camera external parameter matrix, T represents a displacement vector in the camera external parameter matrix, $R_{cf}$ represents a rotation matrix in the camera pose variation, $T_{cf}$ represents a displacement vector in the camera pose variation, $R_{born}$ represents a rotation matrix in the initial camera pose parameter, and $T_{born}$ represents a displacement vector in the initial camera pose parameter.

For example, the camera pose parameter associated with each key frame image may be determined based on an ORB-SLAM3 framework, and details will not be described in embodiments of the present disclosure.

After the camera pose parameter of the target camera at a time instance of capturing each key frame image is obtained, each scene image in the scene image sequence may be projected according to the camera pose parameter associated with each key frame image, so as to obtain the target projection image for generating the scene map.

Through embodiments of the present disclosure, at least one key frame image is determined in the scene image sequence captured by the target camera, the camera pose parameter associated with each key frame image in the at least one key frame image is determined according to the geographic feature associated with the key frame image, and each scene image in the scene image sequence is projected to obtain the target projection image according to the camera pose parameter associated with each key frame image, so as to generate a scene map based on the target projection image. The geographic feature associated with any key frame image indicates a localization information of the target camera at a time instant of capturing the corresponding key frame image.

Each scene image in the scene image sequence is projected according to the camera pose parameter associated with each key frame image, so as to obtain the target projection image for generating the scene map. Such design is conducive to a rapid and low-cost generation of a high-precision scene map, and may be well applied to a crowdsourcing image map generation, a lane attribute update and other scenarios. By calculating the camera pose parameter associated with the key frame image, a generation of accurate road information data may be effectively ensured, and the generated high-precision scene map may be well applied to fields of vehicle assistance control and autonomous driving technologies. Using the target camera as a scene image capturing tool is conducive to reducing a cost of the scene map generation and improving an efficiency of the scene map generation.

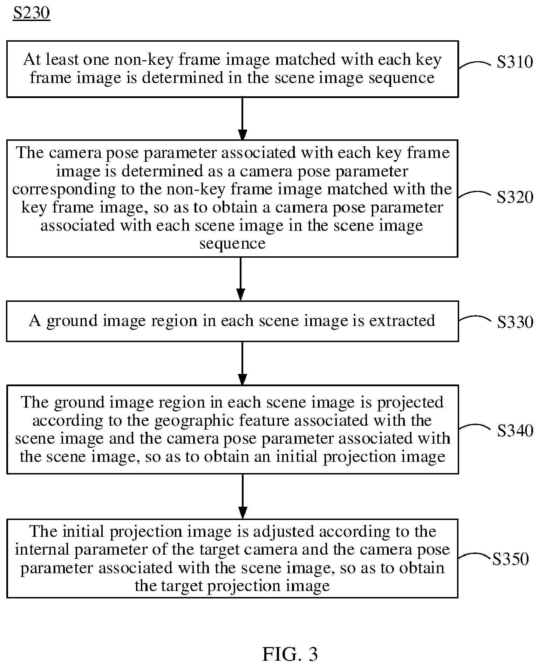

FIG. 3 schematically shows a schematic diagram of a method of processing an image according to other embodiments of the present disclosure.

As shown in FIG 3, operation S230 may include, for example, operation S310 to operation S350.

In operation S310, at least one non-key frame image matched with each key frame image is determined in the scene image sequence.

In operation S320, the camera pose parameter associated with each key frame image is determined as a camera pose parameter corresponding to a non-key frame image matched with the key frame image, so as to obtain the camera pose parameter associated with each scene image in the scene image sequence.

In operation S330, a ground image region in each scene image is extracted.

In operation S340, the ground image region in each scene image is projected according to the geographic feature associated with the scene image and the camera pose parameter associated with the scene image, so as to obtain an initial projection image.

In operation S350, the initial projection image is adjusted according to an internal parameter of the target camera and the camera pose parameter associated with the scene image, so as to obtain the target projection image.

An example flow of each operation in the method of processing the image of such embodiments will be described in detail below.

For example, the camera pose parameter associated with the non-key frame image in the scene image sequence may be determined according to the camera pose parameter associated with each key frame image, so as to obtain the camera pose parameter associated with each scene image in the scene image sequence. In an example method, at least one non-key frame image matched with each key frame image may be determined in the scene image sequence captured by the target camera. A matching degree between a non-key frame image matched with any key frame image and the corresponding key frame image is greater than a predetermined threshold. The matching degree between the non-key frame image and the corresponding key frame image may include, for example, a matching degree based on at least one selected from the feature point, the feature line, the pose variation, the spatial distance, or the spatial angle.

The camera pose parameter associated with each key frame image may be determined as the camera pose parameter corresponding to the non-key frame image matched with the key frame image, so as to obtain the camera pose parameter associated with each scene image in the scene image sequence. At least one key frame image is determined in the scene image sequence, and the camera pose parameter associated with each scene image in the scene image sequence is determined according to the camera pose parameter associated with each key frame image. Such design is conducive to improving an efficiency of determining the camera pose parameter associated with the scene image, improving a projection efficiency for the scene image sequence, and further improving a generation efficiency of a base map for the scene map.

A content recognition may be performed on each scene image to extract the ground image region in the scene image. For example, a neural network model such as VGGNets and ResNets may be used to extract the ground image region in each scene image. In addition, it is also possible to determine an image region conforming to a predetermined image scale as the ground image region based on the predetermined image scale. For example, a bottom half of an image region of the scene image may be determined as the ground image region. The scene image contains the ground image region and a non-ground image region, and a boundary line between the ground image region and the non-ground image region contains a grounding feature point, and the grounding feature point is a boundary point for projection of the corresponding scene image.

When projecting the ground image region in each scene image, in an example method, it is possible to perform a feature extraction on the ground image region in each scene image to obtain a ground feature point associated with each scene image. A pixel coordinate of the ground feature point in each scene image may be determined according to the geographic feature associated with the scene image and the camera pose parameter associated with the scene image. A projection coordinate associated with the ground feature point in each scene image may be determined according to the pixel coordinate of the ground feature point in the scene image. The ground image region in each scene image may be projected according to the projection coordinate associated with the ground feature point in the scene image, so as to obtain the initial projection image.

For any scene image, a feature extraction may be performed on the ground image region in the scene image to obtain the ground feature point associated with the scene image. A world coordinate of the ground feature point in the world coordinate system may be determined according to the geographic feature associated with the scene image, such as the camera GPS information associated with the scene image. A pixel coordinate of the ground feature point in the camera coordinate system may be determined according to the camera pose parameter associated with the scene image and the world coordinate of the ground feature point.

The projection coordinate associated with the ground feature point may be determined according to the pixel coordinate of the ground feature point in the scene image. For example, the pixel coordinate $[\mu, v]$ of the ground feature point may be converted to an image plane coordinate $[x, y, 1]$. A projection plane coordinate $[x`, y`, z]$ of the ground feature point may be calculated by the equation [$x$, $y$, $z$]=R×[x,y,1]. An object space projection plane coordinate of the ground feature point may be calculated by [X,Y,0]=T-[$x$, $y$, $z$]×r. R represents a rotation matrix in the camera pose parameter associated with the scene image, T represents a displacement vector in the camera pose parameter associated with the scene image, and r represents a conversion scale coefficient between a virtual projection plane and an object space projection plane.

The projection coordinate [$X$, $Y$] of the ground feature point may be calculated by the equation [$X$, $Y$]=[X-$X_{min}$, Y-$Y_{min}$]/length, where $X_{min}$ represents a minimum value in the object space projection plane coordinate X of the ground feature point, $Y_{min}$ represents a minimum value in the object space projection plane coordinate Y of the ground feature point, and length represents an image resolution of the initial projection image.

The ground image region in each scene image may be projected according to the projection coordinate associated with the ground feature point in the scene image, so as to obtain an initial projection sub-image associated with each scene image. When an overlapping region exists between the initial projection sub-images associated with a plurality of scene images, performing a splitting operation and a combination on the overlapping region to obtain the initial projection image associated with at least one scene image. As an example, after the initial projection image is obtained, the initial projection image may be adjusted according to the internal parameter of the target camera and the camera pose parameter associated with each scene image, so as to obtain the target projection image.

For example, a pose transformation parameter between each scene image and a corresponding initial projection sub-image may be determined according to the pixel coordinate and the projection coordinate of the ground feature point in each scene image. According to the internal parameter of the target camera and the camera pose parameter associated with each scene image, the pose transformation parameter associated with the corresponding scene image may be adjusted to obtain an adjusted pose transformation parameter associated with each scene image. According to the adjusted pose transformation parameter associated with each scene image, the initial projection sub-image associated with the corresponding scene image may be adjusted to obtain an adjusted initial projection sub-image associated with each scene image. The adjusted initial projection sub-image associated with each scene image may be stitched to obtain the target projection image.

For example, it is possible to determine a homography transformation matrix between each scene image and the corresponding initial projection sub-image according to the pixel coordinate and the projection coordinate of the ground feature point in each scene image. The homography transformation matrix describes a mapping relationship between the scene image and the corresponding initial projection sub-image, and a rotation matrix and a translation vector between the scene image and the corresponding initial projection sub-image may be obtained by decomposing the homography transformation matrix. According to the internal parameter of the target camera and the camera pose parameter associated with each scene image, the pose transformation parameter associated with the corresponding scene image may be adjusted to obtain an adjusted pose transformation parameter associated with each scene image.

After the target projection image is obtained, in an example method, for at least one scene image in the scene image sequence, it is possible to perform a loop-closure detection on the at least one scene image to determine a loop-closure frame image pair (a pair of loop-closure frame images) with a loop-closure constraint in the at least one scene image. A feature point tracking may be performed on the loop-closure frame image pair to obtain matching feature points associated with the loop-closure frame image pair. A relative pose parameter between the loop-closure frame image pair may be determined according to the matching feature points in the loop-closure frame image pair. The pixel coordinates of the matching feature points may be adjusted according to the relative pose parameter between the loop-closure frame image pair, so as to obtain adjusted pixel coordinates associated with the matching feature points. A target projection sub-region associated with the loop-closure frame image pair may be adjusted according to the adjusted pixel coordinates associated with the matching feature points, so as to obtain the adjusted target projection image.

When determining the loop-closure frame image pair in the at least one scene image, a localization range of the target camera at a time instant of capturing the at least one scene image may be determined according to the geographic feature associated with each scene image. The localization range includes at least one localization sub-range divided based on a predetermined size. According to the localization sub-range associated with each scene image, scene images corresponding to the localization sub-ranges having a similarity greater than a predetermined threshold are determined as a loop-closure frame image pair with a loop-closure constraint.

For example, a coordinate division may be performed on a track sequence associated with the at least one scene image according to the GPS information acquired by the target camera at a time instant of capturing each scene image, so as to obtain a plurality of GPS index grids. For example, a 3m*3m coordinate division may be performed on the track sequence associated with the at least one scene image, so as to obtain a plurality of GPS index grids. According to the GPS index grids associated with each scene image, the corresponding scene images may be determined as a loop-closure frame image pair with a loop-closure constraint when a similarity between the GPS index grids is greater than a predetermined threshold.

In another example method, it is possible to provide a calibration point with a unique identification in a scene image by means of manual marking. When scene images containing calibration points are captured by the target camera at different times, it may be determined that the corresponding scene images are a loop-closure frame image pair with a loop-closure constraint. For example, it is also possible to determine a similarity between scene images, and when the similarity is greater than a predetermined threshold, it may be determined that the corresponding scene images are a loop-closure frame image pair with a loop-closure constraint. The similarity between scene images may include a similarity of feature point distribution and/or a similarity of image pixels. In addition, a visual Bag-of-words algorithm Dbow3 may be used to determine the loop-closure frame image pair in the at least one scene image.

After the loop-closure frame image pair with a loop-closure constraint is selected, a feature point tracking may be performed on the loop-closure frame image pair to obtain the matching feature points associated with the loop-closure frame image pair. For example, a matching degree between different feature points in the loop-closure frame image pair may be calculated, and when the matching degree is greater than a predetermined threshold, the corresponding feature points may be determined as the matching feature points of the loop-closure frame image pair. The matching degree between feature points may be measured, for example, by a descriptor distance between feature points. The descriptor distance may be, for example, a Hamming distance between descriptors of the corresponding feature points.

After the matching feature points in the loop-closure frame image pair are determined, an inter-frame motion information of the loop-closure frame image pair may be calculated according to the matching feature points, so as to obtain the relative pose parameter between the loop-closure frame image pair. According to the relative pose parameter between the loop-closure frame image pair, the pixel coordinates of the matching feature points may be adjusted to obtain the adjusted pixel coordinates associated with the matching feature points. For example, a least square method may be used to solve, for example, a nonlinear optimization LM algorithm may be used to construct an optimization objective function, and the pixel coordinates of the matching feature points in the loop-closure frame image pair may be substituted into the optimization objective function. An iterative solving is performed to minimize a value of the optimization objective function, so as to obtain the adjusted pixel coordinates associated with the matching feature points.

After the target projection image is obtained, in an example method, it is possible to back project a predetermined verification feature point in the target projection image to obtain a back-projection coordinate associated with the verification feature point. A back-projection error associated with the target projection image may be calculated according to the back-projection coordinate associated with the verification feature point and the pixel coordinate of the verification feature point in the corresponding scene image. The target projection image may be adjusted according to the back-projection error, so as to obtain the adjusted target projection image.

After the adjusted target projection image is obtained, in an example method, it is possible to determine a heading feature sequence of an acquisition vehicle installed with the target camera according to the camera pose parameter associated with each scene image. The target camera and the acquisition vehicle have a rigid connection relationship, and a rotation parameter and a translation parameter of the target camera relative to the acquisition vehicle remain unchanged. Geographic information data corresponding to the at least one scene image may be generated according to the heading feature sequence of the acquisition vehicle and the geographic feature associated with each scene image. The adjusted target projection image and the geographic information data may be fused to obtain a scene map matched with a heading of the acquisition vehicle.

As an example, a horizontal laser radar may be provided in the acquisition vehicle to acquire a location information of an obstacle around the acquisition vehicle. After the scene map is generated, an obstacle removal may be performed at a corresponding map location in the scene map according to the location information of the obstacle, so as to obtain an adjusted scene map. In addition, road information data such as a lane line, a road sign, a traffic sign, an intersection point information and other data may be marked in the scene map.

As another example, the adjusted scene map may be sliced based on a predetermined slicing scale, so as to obtain a scene tile map. The scene tile map is conducive to improving a display efficiency and a subsequent operation efficiency of the scene map.

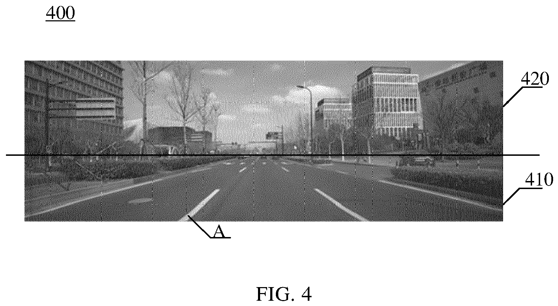

FIG. 4 schematically shows a schematic diagram of a key frame image according to embodiments of the present disclosure.

As shown in FIG. 4, a key frame image 400 contains a ground image region 410 and a non-ground image region 420. A feature extraction is performed on the ground image region 410 in the key frame image 400 to obtain a ground feature point (for example, ground feature point A) in the key frame image 400. A projection coordinate associated with the ground feature point may be determined according to the pixel coordinate of the ground feature point in the camera coordinate system and the camera pose parameter of the target camera at a time instant of capturing the key frame image 400. According to the projection coordinate of the ground feature point in the ground image region 410, the key frame image 400 may be projected to obtain a target projection image for generating a scene map.

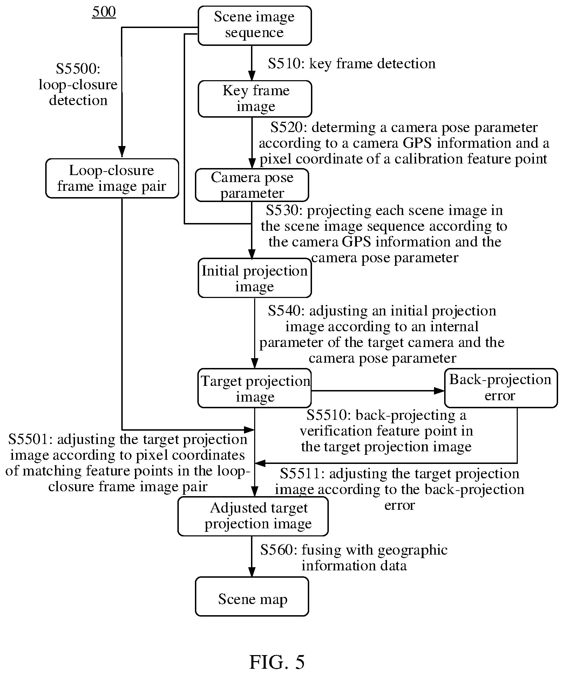

FIG. 5 schematically shows an image processing process according to embodiments of the present disclosure.

As shown in FIG. 5, an image processing process 500 includes operation S510 to operation S540, operation S5500 to operation S5501, operation S5510 to operation S5511, and operation S560.

In operation S510, a key frame detection is performed on a scene image sequence captured by a target camera, so as to obtain at least one key frame image in the scene image sequence.

In operation S520, for each key frame image in the at least one key frame image, a camera pose parameter associated with the corresponding key frame image is determined according to a camera GPS information associated with the key frame image and a pixel coordinate of a calibration feature point in the key frame image.

In operation S530, each scene image in the scene image sequence is projected according to the camera pose parameter associated with the scene image, so as to obtain an initial projection image.

In operation S540, the initial projection image associated with each scene image is adjusted according to an internal parameter of the target camera and the camera pose parameter associated with the scene image, so as to obtain a target projection image.

In operation S5500, a loop-closure detection is performed on at least one scene image in the scene image sequence to obtain a loop-closure frame image pair with a loop-closure constraint in the at least one scene image.

In operation S5501, the target projection image is adjusted according to pixel coordinates of matching feature points in the loop-closure frame image pair.

In operation S5510, a verification feature point in the target projection image is back-projected to obtain a back-projection error associated with the target projection image.

In operation S5511, the target projection image is adjusted according to the back-projection error.

An adjusted target projection image is obtained after operation S5500 to operation S5501 and operation S5510 to operation S5511 are performed on the target projection image.

In operation S560, the adjusted target projection image and geographic information data are fused to obtain a scene map.

Such design is conducive to a rapid and low-cost generation of a high-precision scene map, and may be well applied to a crowdsourcing image map generation, a lane attribute update and other scenarios.

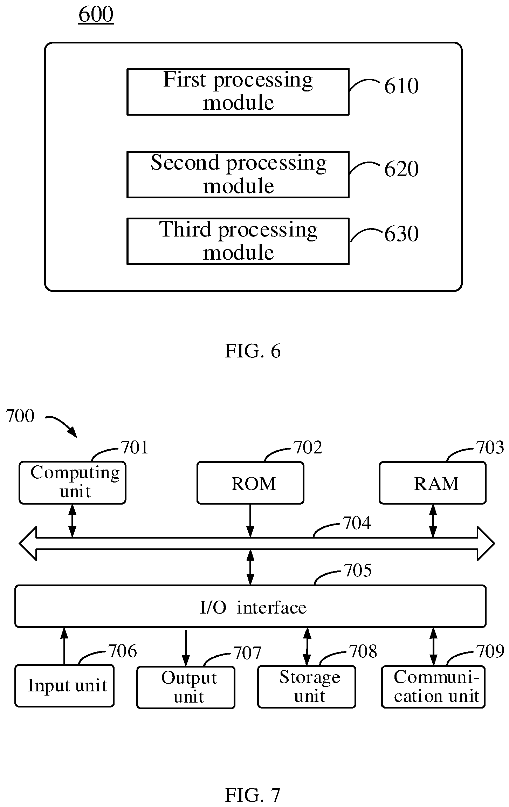

FIG. 6 schematically shows a block diagram of an apparatus of processing an image according to embodiments of the present disclosure.

As shown in FIG. 6, an apparatus 600 of processing an image of embodiments of the present disclosure may include, for example, a first processing module 610, a second processing module 620, and a third processing module 630.

The first processing module 610 may be used to determine at least one key frame image in a scene image sequence captured by a target camera. The second processing module 620 may be used to determine a camera pose parameter associated with each key frame image in the at least one key frame image, according to a geographic feature associated with the key frame image. The third processing module 630 may be used to project each scene image in the scene image sequence to obtain a target projection image according to the camera pose parameter associated with the key frame image, so as to generate a scene map based on the target projection image. The geographic feature associated with any key frame image indicates a localization information of the target camera at a time instant of capturing the corresponding key frame image.

Through embodiments of the present disclosure, at least one key frame image is determined in the scene image sequence captured by the target camera, the camera pose parameter associated with each key frame image in the at least one key frame image is determined according to the geographic feature associated with the key frame image, and each scene image in the scene image sequence is projected to obtain the target projection image according to the camera pose parameter associated with the key frame image, so as to generate a scene map based on the target projection image. The geographic feature associated with any key frame image indicates a localization information of the target camera at a time instant of capturing the corresponding key frame image.

Each scene image in the scene image sequence is projected according to the camera pose parameter associated with the key frame image, so as to obtain the target projection image for generating the scene map. Such design is conducive to a rapid and low-cost generation of a high-precision scene map, and may be well applied to a crowdsourcing image map generation, a lane attribute update and other scenarios. By calculating the camera pose parameter associated with the key frame image, a generation of accurate road information data may be effectively ensured, and the generated high-precision scene map may be well applied to fields of vehicle assistance control and autonomous driving technologies. Using the target camera as a scene image capturing tool is conducive to reducing a cost of the scene map generation and improving an efficiency of the scene map generation.

According to embodiments of the present disclosure, the first processing module includes: a first processing sub-module used to perform a feature extraction on each scene image in the scene image sequence to obtain an image feature associated with each scene image; and a second processing sub-module used to determine the at least one key frame image according to a similarity between the image feature associated with each scene image in the scene image sequence and an image feature associated with a previous key frame image. A predetermined initial mark image in the scene image sequence is determined as a first key frame image, the image feature associated with any scene image includes a feature point and/or a feature line in the corresponding scene image, the feature point includes a pixel having a gray-scale gradient greater than a predetermined threshold, and the feature line includes a line structure having a gray-scale gradient greater than a predetermined threshold.

According to embodiments of the present disclosure, the second processing module includes: a third processing sub-module used to determine, for each key frame image in the at least one key frame image, a world coordinate of a calibration feature point in the key frame image in a world coordinate system according to the geographic feature associated with the key frame image; and a fourth processing sub-module used to determine the camera pose parameter associated with the key frame image, according to the world coordinate of the calibration feature point in the key frame image and a pixel coordinate of the calibration feature point in a camera coordinate system. The camera pose parameter indicates a conversion relationship between the world coordinate system and the camera coordinate system, and the camera pose parameter includes a camera rotation parameter and a camera displacement parameter.

According to embodiments of the present disclosure, the second processing module includes: a fifth processing sub-module used to determine, according to a geographic feature associated with a predetermined initial mark image, a world coordinate of a calibration feature point in the initial mark image in a world coordinate system; a sixth processing sub-module used to determine an initial camera pose parameter associated with the initial mark image, according to the world coordinate of the calibration feature point in the initial mark image and a pixel coordinate of the calibration feature point in a camera coordinate system; a seventh processing sub-module used to perform acalibration feature point tracking on each key frame image based on the initial mark image, so as to obtain a camera pose variation associated with each key frame image based on the initial camera pose parameter; and an eighth processing sub-module used to determine the camera pose parameter associated with each key frame image, according to the initial camera pose parameter and the camera pose variation associated with the key frame image.

According to embodiments of the present disclosure, the third processing module includes: a ninth processing sub-module used to determine, in the scene image sequence, at least one non-key frame image matched with each key frame image; a tenth processing sub-module used to determine the camera pose parameter associated with each key frame image as a camera pose parameter corresponding to the non-key frame image matched with the key frame image, so as to obtain a camera pose parameter associated with each scene image in the scene image sequence; an eleventh processing sub-module used to extract a ground image region in each scene image; a twelfth processing sub-module used to project the ground image region in each scene image according to the geographic feature associated with the scene image and the camera pose parameter associated with the scene image, so as to obtain an initial projection image; and a thirteenth processing sub-module used to adjust the initial projection image according to an internal parameter of the target camera and the camera pose parameter associated with the scene image, so as to obtain the target projection image.

According to embodiments of the present disclosure, the twelfth processing sub-module includes: a first processing unit used to perform a feature extraction on the ground image region in each scene image to obtain a ground feature point associated with the scene image; a second processing unit used to determine a pixel coordinate of the ground feature point in each scene image according to the geographic feature associated with the scene image and the camera pose parameter associated with the scene image; a third processing unit used to determine a projection coordinate associated with the ground feature point in each scene image, according to the pixel coordinate of the ground feature point in the scene image; and a fourth processing unit used to project the ground image region in each scene image according to the projection coordinate associated with the ground feature point in the scene image, so as to obtain the initial projection image.

According to embodiments of the present disclosure, the thirteenth processing sub-module includes: a fifth processing unit used to determine a pose transformation parameter between each scene image and a corresponding initial projection sub-image according to a pixel coordinate of a ground feature point in the scene image and a projection coordinate of the ground feature point in the scene image; a sixth processing unit used to adjust the pose transformation parameter associated with each scene image according to the internal parameter of the target camera and the camera pose parameter associated with the scene image, so as to obtain an adjusted pose transformation parameter associated with each scene image; a seventh processing unit used to adjust the initial projection sub-image associated with each scene image according to the adjusted pose transformation parameter associated with the scene image, so as to obtain an adjusted initial projection sub-image associated with each scene image; and an eighth processing unit used to perform a stitching operation on the adjusted initial projection sub-image associated with each scene image, so as to obtain the target projection image.

According to embodiments of the present disclosure, the apparatus further includes a fourth processing module used to perform a loop-closure detection on at least one scene image in the scene image sequence. The fourth processing module includes: a fourteenth processing sub-module used to, after obtaining the target projection image, perform a loop-closure detection on the at least one scene image, so as to determine a loop-closure frame image pair with a loop-closure constraint in the at least one scene image; a fifteenth processing sub-module used to perform a feature point tracking on the loop-closure frame image pair to obtain matching feature points associated with the loop-closure frame image pair; a sixteenth processing sub-module used to adjust pixel coordinates of the matching feature points according to a relative pose parameter between the loop-closure frame image pair, so as to obtain adjusted pixel coordinates associated with the matching feature points; and a seventeenth processing sub-module used to adjust a target projection sub-image associated with the loop-closure frame image pair according to the adjusted pixel coordinates associated with the matching feature points, so as to obtain an adjusted target projection image.

According to embodiments of the present disclosure, the fourteenth processing sub-module includes: a ninth processing unit used to determine a localization range of the target camera at a time instant of capturing the at least one scene image according to the geographic feature associated with each scene image, wherein the localization range includes at least one localization sub-range divided based on a predetermined size; and a tenth processing unit used to determine, according to a localization sub-range associated with each scene image, scene images corresponding to the localization sub-ranges having a similarity greater than a predetermined threshold as the loop-closure frame image pair with the loop-closure constraint.

According to embodiments of the present disclosure, the apparatus further includes a fifth processing module used to: after obtaining the target projection image, back-project a predetermined verification feature point in the target projection image to obtain a back-projection coordinate associated with the verification feature point; calculate a back-projection error associated with the target projection image, according to the back-projection coordinate associated with the verification feature point and a pixel coordinate of the verification feature point in the corresponding scene image; and adjust the target projection image according to the back-projection error, so as to obtain an adjusted target projection image.

According to embodiments of the present disclosure, the apparatus further includes a sixth processing module used to: after obtaining the adjusted target projection image, determine a heading feature sequence of an acquisition vehicle installed with the target camera, according to the camera pose parameter associated with each scene image; generate geographic information data corresponding to the at least one scene image, according to the heading feature sequence and the geographic feature associated with each scene image; and fuse the adjusted target projection image and the geographic information data to obtain a scene map matched with a heading of the acquisition vehicle. The target camera and the acquisition vehicle have a rigid connection relationship, and a rotation parameter and a translation parameter of the target camera relative to the acquisition vehicle remain unchanged.

According to embodiments of the present disclosure, the acquisition vehicle is provided with a horizontal laser radar used to acquire a location information of an obstacle around the acquisition vehicle. The apparatus further includes a seventh processing module configured to: after the scene map is generated, perform an obstacle removal at a corresponding map location in the scene map according to the location information of the obstacle, so as to obtain an adjusted scene map.

According to embodiments of the present disclosure, the apparatus further includes an eighth processing module used to: after obtaining the adjusted scene map, slice the adjusted scene map based on a predetermined slicing scale, so as to obtain a scene tile map.

According to embodiments of the present disclosure, the target camera includes a monocular camera.

It should be noted that in the technical solution of the present disclosure, a collection, a storage, a use, a processing, a transmission, a provision, a disclosure and other processing of information involved comply with provisions of relevant laws and regulations, and do not violate public order and good custom.

According to embodiments of the present disclosure, the present disclosure further provides an electronic device, a readable storage medium, and a computer program product.

FIG. 7 schematically shows a block diagram of an electronic device for implementing a method of processing an image according to embodiments of the present disclosure.

FIG. 7 schematically shows a block diagram of an exemplary electronic device 700 for implementing embodiments of the present disclosure. The electronic device 700 is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 7, the electronic device 700 includes a computing unit 701 which may perform various appropriate actions and processes according to a computer program stored in a read only memory (ROM) 702 or a computer program loaded from a storage unit 708 into a random access memory (RAM) 703. In the RAM 703, various programs and data necessary for an operation of the electronic device 700 may also be stored. The computing unit 701, the ROM 702 and the RAM 703 are connected to each other through a bus 704. An input/output (I/O) interface 705 is also connected to the bus 704.

A plurality of components in the electronic device 700 are connected to the I/O interface 705, including: an input unit 706, such as a keyboard, or a mouse; an output unit 707, such as displays or speakers of various types; a storage unit 708, such as a disk, or an optical disc; and a communication unit 709, such as a network card, a modem, or a wireless communication transceiver. The communication unit 709 allows the electronic device 700 to exchange information/data with other devices through a computer network such as Internet and/or various telecommunication networks.

The computing unit 701 may be various general-purpose and/or dedicated processing assemblies having processing and computing capabilities. Some examples of the computing unit 701 include, but are not limited to, a central processing unit (CPU), a graphics processing unit (GPU), various dedicated artificial intelligence (AI) computing chips, various computing units that run machine learning model algorithms, a digital signal processing processor (DSP), and any suitable processor, controller, microcontroller, etc. The computing unit 701 executes various methods and steps described above, such as the method of processing the image. For example, in some embodiments, the method of processing the image may be implemented as a computer software program which is tangibly embodied in a machine-readable medium, such as the storage unit 708. In some embodiments, the computer program may be partially or entirely loaded and/or installed in the electronic device 700 via the ROM 702 and/or the communication unit 709. The computer program, when loaded in the RAM 703 and executed by the computing unit 701, may execute one or more steps in the method of processing the image described above. Alternatively, in other embodiments, the computing unit 701 may be configured to perform the method of processing the image by any other suitable means (e.g., by means of firmware).

Various embodiments of the systems and technologies described herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from a storage system, at least one input device and at least one output device, and may transmit the data and instructions to the storage system, the at least one input device, and the at least one output device.

Program codes for implementing the methods of the present disclosure may be written in one programming language or any combination of more programming languages. These program codes may be provided to a processor or controller of a general-purpose computer, a dedicated computer or other programmable data processing apparatus, such that the program codes, when executed by the processor or controller, cause the functions/operations specified in the flowcharts and/or block diagrams to be implemented. The program codes may be executed entirely on a machine, partially on a machine, partially on a machine and partially on a remote machine as a stand-alone software package or entirely on a remote machine or server.

In the context of the present disclosure, a machine-readable medium may be a tangible medium that may contain or store a program for use by or in connection with an instruction execution system, an apparatus or a device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination of the above. More specific examples of the machine-readable storage medium may include an electrical connection based on one or more wires, a portable computer disk, a hard disk, a random access memory (RAM), a read only memory (ROM), an erasable programmable read only memory (EPROM or a flash memory), an optical fiber, a compact disk read only memory (CD-ROM), an optical storage device, a magnetic storage device, or any suitable combination of the above.

In order to provide interaction with the user, the systems and technologies described here may be implemented on a computer including a display device (for example, a CRT (cathode ray tube) or LCD (liquid crystal display) monitor) for displaying information to the user, and a keyboard and a pointing device (for example, a mouse or a trackball) through which the user may provide the input to the computer. Other types of devices may also be used to provide interaction with the user. For example, a feedback provided to the user may be any form of sensory feedback (for example, visual feedback, auditory feedback, or tactile feedback), and the input from the user may be received in any form (including acoustic input, speech input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and the Internet.

The computer system may include a client and a server. The client and the server are generally far away from each other and usually interact through a communication network. The relationship between the client and the server is generated through computer programs running on the corresponding computers and having a client-server relationship with each other. The server may be a cloud server, a server of a distributed system, or a server combined with a blockchain.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-mentioned specific embodiments do not constitute a limitation on the scope of protection of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

**Claims**

1. A method of processing an image, comprising:

   determining (S210) at least one key frame image in a scene image sequence captured by a target camera;
   determining (S220) a camera pose parameter associated with each key frame image in the at least one key frame image, according to a geographic feature associated with the key frame image; and
   projecting (S230) each scene image in the scene image sequence to obtain a target projection image according to the camera pose parameter associated with each key frame image, so as to generate a scene map based on the target projection image,
   wherein the geographic feature associated with any key frame image indicates a localization information of the target camera at a time instant of capturing the corresponding key frame image.

2. The method according to claim 1, wherein the determining at least one key frame image in a scene image sequence captured by a target camera comprises:

   performing a feature extraction on each scene image in the scene image sequence to obtain an image feature associated with each scene image; and
   determining the at least one key frame image according to a similarity between the image feature associated with each scene image in the scene image sequence and an image feature associated with a previous key frame image,
   wherein a predetermined initial mark image in the scene image sequence is determined as a first key frame image, the image feature associated with any scene image comprises a feature point and/or a feature line in the corresponding scene image, the feature point comprises a pixel having a gray-scale gradient greater than a predetermined threshold, and the feature line comprises a line structure having a gray-scale gradient greater than a predetermined threshold.

3. The method according to claim 1, wherein the determining a camera pose parameter associated with each key frame image in the at least one key frame image, according to a geographic feature associated with the key frame image comprises: for each key frame image in the at least one key frame image,

   determining a world coordinate of a calibration feature point in the key frame image in a world coordinate system, according to the geographic feature associated with the key frame image; and
   determining the camera pose parameter associated with the key frame image, according to the world coordinate of the calibration feature point in the key frame image and a pixel coordinate of the calibration feature point in a camera coordinate system,
   wherein the camera pose parameter indicates a conversion relationship between the world coordinate system and the camera coordinate system, and the camera pose parameter comprises a camera rotation parameter and a camera displacement parameter.

4. The method according to claim 1, wherein the determining a camera pose parameter associated with each key frame image in the at least one key frame image, according to a geographic feature associated with the key frame image comprises:

   determining, according to a geographic feature associated with a predetermined initial mark image, a world coordinate of a calibration feature point in the initial mark image in a world coordinate system;
   determining an initial camera pose parameter associated with the initial mark image, according to the world coordinate of the calibration feature point in the initial mark image and a pixel coordinate of the calibration feature point in a camera coordinate system;

performing a calibration feature point tracking on each key frame image based on the initial mark image, so as to obtain a camera pose variation associated with each key frame image based on the initial camera pose parameter; and

determining the camera pose parameter associated with each key frame image, according to the initial camera pose parameter and the camera pose variation associated with the key frame image.

5. The method according to claim 1, wherein the projecting each scene image in the scene image sequence to obtain a target projection image according to the camera pose parameter associated with each key frame image comprises:

determining (S310), in the scene image sequence, at least one non-key frame image matched with each key frame image;

determining (S320) the camera pose parameter associated with each key frame image as a camera pose parameter corresponding to the non-key frame image matched with the key frame image, so as to obtain a camera pose parameter associated with each scene image in the scene image sequence;

extracting (S330) a ground image region in each scene image;

projecting (S340) the ground image region in each scene image according to the geographic feature associated with the scene image and the camera pose parameter associated with the scene image, so as to obtain an initial projection image; and

adjusting (S350) the initial projection image according to an internal parameter of the target camera and the camera pose parameter associated with the scene image, so as to obtain the target projection image.

6. The method according to claim 5, wherein the projecting the ground image region in each scene image according to the geographic feature associated with the scene image and the camera pose parameter associated with the scene image so as to obtain an initial projection image comprises:

performing a feature extraction on the ground image region in each scene image to obtain a ground feature point associated with the scene image;

determining a pixel coordinate of the ground feature point in each scene image, according to the geographic feature associated with the scene image and the camera pose parameter associated with the scene image;

determining a projection coordinate associated with the ground feature point in each scene image, according to the pixel coordinate of the ground feature point in the scene image; and

projecting the ground image region in each scene image according to the projection coordinate associated with the ground feature point in the scene image, so as to obtain the initial projection image.

7. The method according to claim 5, wherein the adjusting the initial projection image according to an internal parameter of the target camera and the camera pose parameter associated with the scene image so as to obtain the target projection image comprises:

determining a pose transformation parameter between each scene image and a corresponding initial projection sub-image according to a pixel coordinate of a ground feature point in the scene image and a projection coordinate of the ground feature point in the scene image;

adjusting the pose transformation parameter associated with each scene image according to the internal parameter of the target camera and the camera pose parameter associated with the scene image, so as to obtain an adjusted pose transformation parameter associated with each scene image;

adjusting the initial projection sub-image associated with each scene image according to the adjusted pose transformation parameter associated with the scene image, so as to obtain an adjusted initial projection sub-image associated with each scene image; and

performing a stitching operation on the adjusted initial projection sub-image associated with each scene image, so as to obtain the target projection image.

8. The method according to claim 6, further comprising: after obtaining the target projection image,

performing a loop-closure detection on at least one scene image in the scene image sequence, so as to determine a loop-closure frame image pair with a loop-closure constraint in the at least one scene image;

performing a feature point tracking on the loop-closure frame image pair to obtain matching feature points associated with the loop-closure frame image pair;

adjusting pixel coordinates of the matching feature points according to a relative pose parameter between the loop-closure frame image pair, so as to obtain adjusted pixel coordinates associated with the matching feature points; and

adjusting a target projection sub-image associated with the loop-closure frame image pair according to the adjusted pixel coordinates associated with the matching feature points, so as to obtain an adjusted target projection image.

9. The method according to claim 8, wherein the performing a loop-closure detection on at least one scene image in the scene image sequence so as to determine a loop-closure frame image pair with a loop-closure constraint in the at least one scene image comprises:

determining a localization range of the target camera at a time instant of capturing the at least one scene image according to the geographic feature associated with each scene image, wherein the localization range comprises at least one localization sub-range divided based on a predetermined size; and

determining, according to a localization sub-range associated with each scene image, scene images corresponding to the localization sub-ranges having a similarity greater than a predetermined threshold as the loop-closure frame image pair with the loop-closure constraint.

10. The method according to claim 1, further comprising: after obtaining the target projection image,

back-projecting a predetermined verification feature point in the target projection image to obtain a back-projection coordinate associated with the verification feature point;

calculating a back-projection error associated with the target projection image, according to the back-projection coordinate associated with the verification feature point and a pixel coordinate of the verification feature point in the corresponding scene image; and

adjusting the target projection image according to the back-projection error, so as to obtain an adjusted target projection image.

11. The method according to claim 8 or 10, further comprising: after obtaining the adjusted target projection image,

determining a heading feature sequence of an acquisition vehicle installed with the target camera, according to the camera pose parameter associated with each scene image;

generating geographic information data corresponding to at least one scene image, according to the heading feature sequence and the geographic feature associated with each scene image; and

fusing the adjusted target projection image and the geographic information data to obtain a scene map matched with a heading of the acquisition vehicle,

wherein the target camera and the acquisition vehicle have a rigid connection relationship, and a rotation parameter and a translation parameter of the target camera relative to the acquisition vehicle remain unchanged,

preferably, wherein the acquisition vehicle is provided with a horizontal laser radar configured to acquire a location information of an obstacle around the acquisition vehicle,

the method further comprises: after generating the scene map,

performing an obstacle removal at a corresponding map location in the scene map according to the location information of the obstacle, so as to obtain an adjusted scene map,

preferably, the method further comprising: after obtaining the adjusted scene map,

slicing the adjusted scene map based on a predetermined slicing scale, so as to obtain a scene tile map,

preferably, wherein the target camera comprises a monocular camera.

12. An apparatus (600) of processing an image, comprising:

a first processing module (610) configured to determine at least one key frame image in a scene image sequence captured by a target camera;

a second processing module (620) configured to determine a camera pose parameter associated with each key frame image in the at least one key frame image, according to a geographic feature associated with the key frame image; and

a third processing module (630) configured to project each scene image in the scene image sequence to obtain a target projection image according to the camera pose parameter associated with each key frame image, so as to generate a scene map based on the target projection image,

wherein the geographic feature associated with any key frame image indicates a localization information of the target camera at a time instant of capturing the corresponding key frame image.

13. An electronic device (700), comprising:

at least one processor; and
a memory communicatively connected to the at least one processor, wherein the memory stores instructions executable by the at least one processor, and the instructions, when executed by the at least one processor, cause the at least one processor to implement the method according to any one of claims 1 to 11.

14. A non-transitory computer-readable storage medium having computer instructions therein, wherein the computer instructions are configured to cause a computer system to implement the method according to any one of claims 1 to 11.

15. A computer program product containing a computer program, wherein the computer program, when executed by a processor, causes the processor to implement the method according to any one of claims 1 to 11.

<u>100</u>

101

102

103

FIG. 1

<u>200</u>

| |
|---|
| At least one key frame image is determined in a scene image sequence captured by a target camera |

S210

| |
|---|
| A camera pose parameter associated with each key frame image in the at least one key frame image is determined according to a geographic feature associated with the key frame image, and the geographic feature associated with any key frame image indicates a localization information of the target camera at a time instant of capturing the corresponding key frame image |

S220

| |
|---|
| Each scene image in the scene image sequence is projected to obtain a target projection image according to the camera pose parameter associated with the key frame image, so as to generate a scene map based on the target projection image |

S230

FIG. 2

S230

At least one non-key frame image matched with each key frame image is determined in the scene image sequence — S310

The camera pose parameter associated with each key frame image is determined as a camera pose parameter corresponding to the non-key frame image matched with the key frame image, so as to obtain a camera pose parameter associated with each scene image in the scene image sequence — S320

A ground image region in each scene image is extracted — S330

The ground image region in each scene image is projected according to the geographic feature associated with the scene image and the camera pose parameter associated with the scene image, so as to obtain an initial projection image — S340

The initial projection image is adjusted according to the internal parameter of the target camera and the camera pose parameter associated with the scene image, so as to obtain the target projection image — S350

FIG. 3

400

420

410

A

FIG. 4

500

Scene image
sequence

S5500:
loop-closure
detection

S510: key frame detection

Key frame
image

S520: determing a camera pose parameter
according to a camera GPS information and a
pixel coordinate of a calibration feature point

Loop-closure
frame image pair

Camera pose
parameter

S530: projecting each scene image in
the scene image sequence according to
the camera GPS information and the
camera pose parameter

Initial projection
image

S540: adjusting an initial projection
image according to an internal
parameter of the target camera and the
camera pose parameter

Target projection
image

Back-projection
error

S5510: back-projecting a
verification feature point in
the target projection image

S5501: adjusting the target projection
image according to pixel coordinates
of matching feature points in the loop-
closure frame image pair

S5511: adjusting the target projection
image according to the back-projection
error

Adjusted target
projection image

S560: fusing with geographic
information data

Scene map

FIG. 5

<u>600</u>

```
┌──────────────────────────────────────┐
│   ┌────────────────────────┐          │
│   │   First processing     │───610    │
│   │       module           │          │
│   └────────────────────────┘          │
│                                        │
│   ┌────────────────────────┐          │
│   │   Second processing    │───620    │
│   │       module           │          │
│   └────────────────────────┘          │
│                                        │
│   ┌────────────────────────┐          │
│   │   Third processing     │───630    │
│   │       module           │          │
│   └────────────────────────┘          │
└──────────────────────────────────────┘
```

FIG. 6

FIG. 7